(19) **Europäisches Patentamt European Patent Office Office européen des brevets**

(11) **EP 2 767 949 A1**

(12) **EUROPEAN PATENT APPLICATION**

(43) Date of publication:
20.08.2014 Bulletin 2014/34

(51) Int Cl.:
*G06Q 40/06* (2012.01)

(21) Application number: 13155322.4

(22) Date of filing: 14.02.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Taylored Financial Products Limited London EC2R 6EL (GB)**

(72) Inventor: **Wystup, Uwe 65529 Waldems (DE)**

(74) Representative: **Kugler, Jörg et al Tergau & Walkenhorst Patentanwälte - Rechtsanwälte Eschersheimer Landstraße 105-107 60322 Frankfurt am Main (DE)**

(54) **Financial Instrument, methods and systems to hedge options**

(57) A financial instrument, especially financial contract, for an underlying, especially an asset or index, shall allow the trading, and therefore hedging, of the key features of the distribution of future underlying prices, and hence enabling the execution of efficient and effective hedging strategies and which further allows highly customized investment and speculation strategies. Therefore, its final payoff is a product of powers of one or several prices or values of underlyings or logarithms thereof taken at one or several moments in time, excluding the case of one single underlying to the power of one.

FIG. 1

EP 2 767 949 A1

**Description**

The invention relates to a financial instrument. It further relates to a method to build such an instrument, to a method to hedge a portfolio, to broadcast current or past prices of such an instrument, to a method that uses the price of such an instrument to calculate the reference value for other financial instruments. It further relates to a server-based market system, hedging system, and trading system.

The dealing in financial instruments, including securities, is driven by diverse motivations, of which the main are: investment, speculation, and hedging. While investment is typical for medium and long-term investors that acquire the risk connected to a financial asset and hope to profit from the asset's yields and its price appreciation, speculators act within a much shorter time horizon which can be less than a day is some cases, hoping to benefit from short-term price variations.

To the contrary, a hedging activity carries no wish as to the change of the price of a financial asset or its yield. It has as its sole driver the offset of the price variations of a given instrument that is held. Such an offset is accomplished by trading the financial asset (or portfolio of assets) whose price (value) drives the price of the instrument one wants to hedge. A hedging strategy, when followed until the maturity of the instruments, is an attempt to produce trading gains (or losses) that offset the payoff of the instruments, i.e., producing trading gains (or losses) equal to the payoff in size but with opposite sign.

There are static and dynamic trading or hedging strategies. A static hedging strategy is a hedging strategy that is set up at the time of the trade of the financial instruments and does not require further revisions until the maturity of the instruments. Dynamic strategies, however, do require periodic revisions, typically a rebalancing with no cash inflow or outflow, of the hedging portfolio. These revisions may be discrete, e.g. daily, monthly, or continuous, i.e. at every possible instant.

The devise of a hedging strategy may rely on a number of assumptions. These assumptions are usually gathered in the form of a model of price evolution. The hedging strategies devised in this manner are model dependent and depend on the verification of the model assumptions to be effective in producing the target gains (or losses). There are also model-independent hedging strategies that are effective in any case.

A model-prescribed hedging strategy, which - by definition - is model dependent, is a hedging strategy that, in case the model assumptions are verified, would produce the desired target gains (or losses). For example, in the Black-Scholes model, the prescribed hedging strategy is known as delta-hedging. This hedging strategy is based on the quantity delta, which is defined as the derivative of the value of the financial instrument with respect to the price of the underlying. If the Black-Scholes model assumptions were verified, such a strategy would succeed in producing trading gains (or losses) equal to the financial instrument payoff in size but with opposite sign.

It is also universal practice in the industry to hedge the model risk. The model risk involves both model assumptions that are not verified in practice as well as model parameters that may be wrongly or inaccurately determined. For example, in the Black-Scholes model, the hedging of changes in the volatility parameter, known as vega-hedging, is model risk hedging as the model assumes that that parameter does not change.

A hedging strategy suitable for real-world settings is a hedging strategy that is both possible and feasible to implement and not just a theoretical construct. For example, delta-hedging in the Black-Scholes model is not practically feasible as it requires - in principle - unaccountably infinitely many rebalances of the hedging portfolio. An example where hedging is possible and feasible in a straight-forward manner is a foreign exchange forward transaction. Hedging in this case requires a loan in one currency, a deposit in another currency, and a spot foreign exchange transaction.

The effectiveness of hedging of financial instruments whose payoff is not a linear function of the underlying price is critically dependent on how close to reality the distribution of future underlying prices and the price dynamics is captured by the model of choice.

A key quantity for the hedging of portfolios of financial instruments is the volatility of the underlying prices, which can be seen as a measure of risk. It is usually included in models' evolution of prices of underlyings either as a parameter or as a random variable or process. The term "realized volatility" refers to the annualized standard deviation of a series of price returns, which are typically logarithmic returns. The term "implied volatility" refers to a model-dependent concept that works as follows. A financial instrument whose payoff depends on the price of a financial asset price may be evaluated in the context of a model that assumes a given financial asset's price evolution. If such an evaluation depends on several observable variables and one variable that is not observable, this non-observable variable may be chosen in such a way that the model price of the instruments matches the market price of the instruments.

In case of the Black-Scholes model, the only unobservable variable is the volatility $\sigma$ parameter. Therefore, the implied volatility is the $\sigma$ that parameterizes the Black-Scholes model in such a way that the model price of an instrument matches its market price. Any instrument whose price depends on observable variables except the volatility will have its own implied volatility. These various volatilities corresponding to different instruments are not necessarily equal. In fact, it is well known that the prices of call (or put) options with different maturities and/or different strike prices give rise to different implied volatilities. This fact is commonly known as the term structure and smile-effect and is represented by the volatility surface.

The industry has acknowledged that the implied volatilities capture the key information that allows gauging the price at which risk (risk of price returns) is traded. However, as there are many different implied volatilities, one for each instrument, it is hard to track the evolution of all of them and check their consistency. This problem has naturally led to aggregation procedures of the different implied volatilities in order to synthesize all of them in one single measure. Such aggregations are known as implied volatility indexes, such as, for example, VIX or VSTOXX.

It is an object of the present invention to provide a financial instrument, henceforth also called power instrument, that allows the trading, and therefore hedging, of the key features of the distribution of future underlying prices, and hence enabling the execution of efficient and effective hedging strategies and which further allows highly customized investment and speculation strategies.

A further object of the invention is to provide a method to build such a financial instrument.

A still further object of the invention is to provide a method for efficiently hedging a portfolio.

Still another object of the invention is to provide a method for broadcasting or making public current or past prices of such financial instruments or any other value derived from them.

Still another object of the invention is to provide a method for calculating the reference value for financial instruments.

Another object of the invention is to provide a market system, a hedging system and a trading system that enable the trading of the said financial instruments and its use for customized risk management.

Regarding the financial instrument, this object is solved by the features of claim 1. Therein is specified a financial instrument, especially financial contract, for an underlying, especially an asset or index, whereby its final payoff is a product of powers of one or several prices or logarithms of prices of underlyings taken at one or several moments in time, excluding the case of one single underlying to the power of one. As an example, it may be built of several powers of functions of several prices of underlyings, each price taken at a moment in time. The moments in time for the various prices may or may not be identical. Another example would be the product of powers of functions of one price of an underlying observed at different moments in time.

With $S_i(T_i)$ being the price of an underlying $i$, especially an asset price or index value, observed at the maturity date $T_i$, $\alpha_i$ being a real number, positive or negative, $n$ being a positive integer, and with $f_i$ representing either the identity function, $f_i(x) = x$, or the logarithm function, $f_i(x) = \log(x)$, of the underlying prices, the payoff $\Phi$ of such an instrument, can be written as

$$\Phi = \prod_{i=1}^{n} f_i\big(S_i(T_i)\big)^{\alpha_i},$$

where $\prod_{i=1}^{n}$ denotes the product with $i$ running in integers from 1 to $n$. It is customary to use $\log(x)$ to represent the natural logarithm function but it can actually represent a logarithm function of any base, as they are all proportional to each other.

The case $n = 1$ and $\alpha_i = 1$, i.e. a term with only one underlying and first power of its price, corresponds either to the payoff of a common financial future contract or to that of a log-contract already referred in the specialized literature, and are therefore excluded from the claims. It should be noted that $S_i(T_i)$ for different $i$ may refer to the same underlying, just observed at different points in time $T_i$. These instruments will henceforth be referred to as "power instruments".

Preferred embodiments of the invention are specified in the dependent claims and in the specification related to a drawing.

The invention aims at enabling an effective hedging strategy that is suitable for real-world applications, which should on the one hand not require too many subsequent revisions and on the other hand provide sufficient flexibility to hedge a diverse range of payoffs. Delta-hedging, for instance, is not effective for real-world applications, since revisions are necessary too often and it does not offer any sort of hedging for changing volatility or other moments of the underlying price returns distribution.

Moreover, in the context of a hedging strategy, financial instruments, e.g. options, that are used to hedge the portfolio of the corresponding underlyings should provide the required flexibility to tuning the accuracy with which the portfolio is hedged. Hence, a key requirement consists of versatile financial tools to approximate the portfolio, whereby the level of approximation can be chosen as desired. This requirement is met by the financial instrument according to the present invention. For example, by introducing the power instrument $S_1(T_1)^2$ in the hedging strategy, one obtains a second-order approximation of the contract value function. If one further adds terms with higher-order payoffs such as $S_1(T_1)^3$, $S_1(T_1)^4$, etc., the approximation can be successively improved. Hence the hedging strategy can be tailored to provide the desired accuracy.

In addition, since by employing these power instruments, the hedging portfolio not only approximates the slope but also the curvature of the value function, model risk hedging becomes possible. For example, if one considers the Black-Scholes model, a change in the volatility parameter will have an effect on the contract value function, but it will also have an effect in all power instruments with powers greater than one. In a hedging portfolio, these two effects are in opposite directions and thus improve the hedging effectiveness. The same is true for the others parameters of the Black-Scholes model and also for parameters of other models. This is the case because of the non-linear dependence of the payoff, and consequently the price of the instrument with respect to the price of the underlying.

The improvement in the hedging effectiveness is especially relevant in the context of exchange-traded standardized option contracts. A set of these instruments with the same underlying as other option contracts improves the hedging effectiveness of all options with maturity T, irrespective of style (call or put) or strike price. Thus, a small set of power instruments like $S_1(T_1)^2$, $S_1(T_1)^3$, $S_1(T_1)^4$ may be used to hedge all of these options, with each option requiring its specific quantities. This is remarkable because it creates an overall consistency among the prices of all options that stem from the prices of the power instruments themselves. Thus, the prices of the power instruments determine to a large extent the prices of all such options. Therefore, trading of unknown quantities that influence the price of all options in a small set of financial instruments becomes feasible.

This effect has an immediate important consequence with respect to implied volatility monitoring. For instance, regarding the power instrument $S_1(T_1)^2$, its price within the Black-Scholes model depends only on one unobservable variable, namely the volatility $\sigma$. Therefore, one can compute the implied volatility in the price of this power instrument and apply it as an implied volatility index, bypassing the cumbersome aggregation procedures that underlie the VIX and the VSTOXX. Furthermore, having obtained the implied volatility, one can use the price of the power instrument $S_1(T_1)^3$ to calculate the implied skewness of the return distribution of the respective underlying. In the same way, the price of the power instrument $S_1(T_1)^4$ allows the calculation of the implied kurtosis. If one considers two asset prices or indexes, henceforth indexed 1 and 2, the power instruments $S_1(T_1)^2$ and $S_2(T_1)^2$ would allow the calculation of the respective implied volatilities. The power instrument $S_1(T_1)S_2(T_1)$ would allow to compute the implied correlation between the returns of the prices of $S_1$ and $S_2$. In the same way, the power instrument $S_1(T_1)S_1(T_2)$ would allow the computation of model parameters that characterize the co-dependence between the price of $S_1$ observed at two different points in time. Thus, the power instruments allow for the creation of suitable volatility indexes as well as indexes for other parameters and statistics of the price return distributions. These indexes may then themselves be used as underlyings of derivative securities as it is the case with the VIX and VSTOXX.

With respect to the method for building the above-mentioned power instruments, the object of the invention is solved by

- Selecting at least one underlying;
- Selecting at least one moment in time;
- Choosing whether or not to apply the logarithm function to the price of each underlying;
- Building powers of the value of said function applied to the price of each selected underlying observed at the selected moment in time;
- Multiplying said powers, excluding the case of one single underlying, observed at one single moment in time, to the power of one.

This method allows building various kinds of power instruments. One category of these contracts comprise one single underlying which is raised to the power of 2, 3, 4, ..., i.e. $S_1(T_1)^2$, $S_1(T_1)^3$, $S_1(T_1)^4$, ..., where $S_1(T_1)$ is the price of the corresponding underlying at time $T_1$, and the function $f_1$ of the price is chosen to be the identity function, i.e., $f_1(x) = x$. Instead of using the price $S_1$, the logarithm of the price can be employed too, i.e., $f_1(x) = \log(x)$, yielding $\log(S_1(T_1))^2$, $\log(S_1(T_1))^3$, $\log(S_1(T_1))^4$, etc. Although less straight forward to track their price variation than when the identity function is used, prices of these power instruments using the logarithm function would make the calibration of models that postulate price returns, as it is standard in the industry, much more straight forward than those.

With respect to the method for hedging a portfolio, the portfolio comprising a number of underlyings and financial instruments whose payoff depends on them, the object of the invention is solved by adding a number of power instruments, whereby the risk of changing prices of each of the underlyings of the said financial instruments is present in the portfolio and offset by said instruments.

In a preferred version of this method, a number of power instruments is added to the portfolio such that the potential gains and losses profile is changed to best match the risk preferences of the owner of the portfolio. As an example, this can be achieved by trading the minimization of the volatility of the portfolio value, or by eliminating of some unwanted portfolio valuation outcomes. As will be shown below, such a prescription is possible due to the mathematical structure of these contracts, namely the raising the prices of the corresponding underlying, or functions thereof, to powers of 2, 3, 4, etc. The higher the power of the power instruments included, the less dependent is the value of the hedged portfolio on the underlying price or prices.

Regarding the method for broadcasting or making public current or past prices of at least one power instrument or any other value derived from them, the object is solved by transmitting these prices to data systems that allow public access. In particular, this can be achieved through systems that stream price data live and/or warehouse such data and make it available at a deferred time, either free of charge or at a cost. These include, for example, the Reuters and Bloomberg data services. Values derived from power instruments prices include for example the calculation of at least one unobserved variable or parameter of a computational financial model, which is implied in the market price of at least one power instrument. The constant calculation of such a parameter or variable would in turn enable the creation of an index, enable the use of time series analysis.

The present invention also allows to calculate the reference value for financial instruments, whereby the price of at least one power instrument, or any other value derived from it, is used for its calculation. For example, the power instrument $S_1(T_1)^2$ allows for the calculation of a Black-Scholes-implied-volatility, which can itself be used as the payoff of other financial instruments.

Regarding the market system, the object is solved with a server-based market system comprising an updatable data base containing orders and transactions of said instruments, and providing output data of orders and transactions relating to at least one power instrument. The market system can be implemented via hardware and/or software on a server. The orders are matched and the corresponding transactions are processed.

Regarding the hedging system, the object is solved by a server-based hedging system for hedging a portfolio, comprising an instruments calculator which according to given hedging criteria, for example minimization of the volatility of the portfolio value or other measures of the risk profile, calculates quantities or other values relating to at least one power instrument. These quantities may, and are likely to, depend on input received from a market system especially regarding the current market state, as well as depend on for receiving input, especially regarding other current market information, from a market data server. This information on the current market information can, for instance, comprise availability of certain underlyings and derivatives, interest rates, exchange rates, etc. The hedging system can be implemented via hardware and/or software on a server and rely on appropriate interface to communicate with the market system and a trading system described below, which can be realized for example with an Ethernet connection and a LAN (local area network).

With respect to the trading system, the object is solved with a server-based trading system that submits orders for transactions and captures order executions of at least one power instrument, which communicates with a hedging system and a market system described above. Depending on the hedging criteria, the hedging system selects from the trading system a number of power instruments, which in turn sends corresponding orders to the market system and monitors their execution. Captured executions are then communicated to the hedging system to update the portfolio composition and risks. The trading system and hedging system can be preferably realized as a server-based software program running on the same hardware. Alternatively, they can run on separate Hardware. Hardware-wise, they then are realized as two separate servers that communicate with each other through an appropriate interface, which can be realized for example with an Ethernet connection and a LAN.

The advantages of the invention are especially as follows. Hedging strategies with financial instruments according to the present invention are efficient because they allow the trading of the key features of the distribution of future underlying prices using a smaller number of financial instruments than current hedging strategies used in practice. In the case of dynamic hedging strategies, it also requires fewer revisions of the hedging strategy over time. The consequence of this are lower transaction costs, including both trading fees and bid-ask spreads, and the ability to trade and hedge larger volumes than current hedging strategies used in practice. The method is also more cost-efficient because of smaller needs of communications bandwidth, computing power and memory, smaller operational risk, better control and portfolio valuation consistency, all of which due to the use of a smaller number of financial instruments used. If the financial instruments according to claim 1 are listed in derivatives exchanges, they would even provide the additional efficiency of reducing the volume of resources required as margins to absorb potential losses, and consequently the reduction of financing costs associated with the use of those resources.

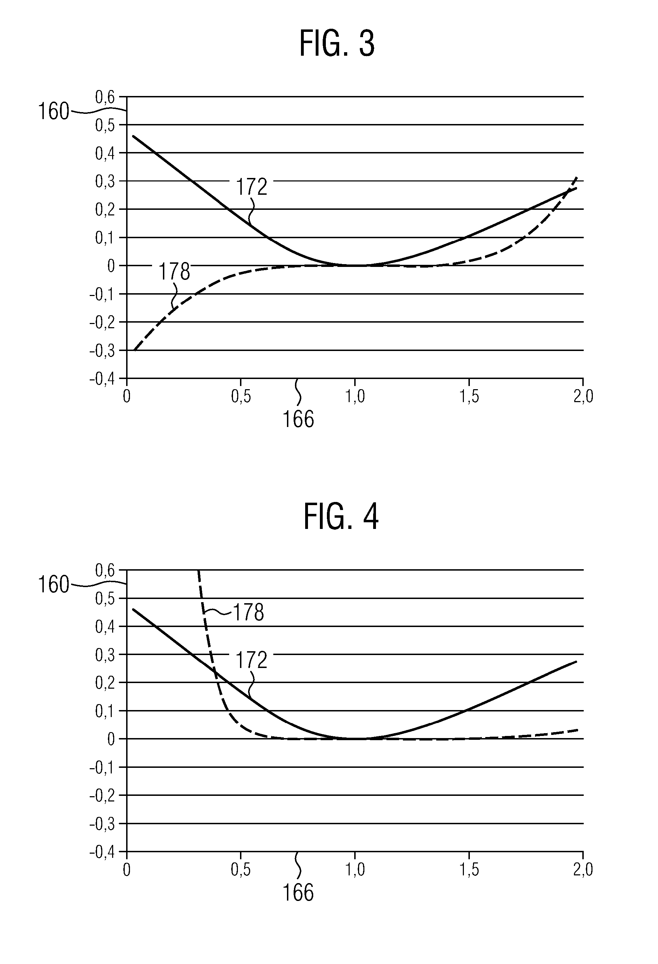

The hedging strategies are also effective because these financial instruments are highly sensitive to the key features, both to each feature in isolation or to aggregations of many features, of the distribution of future underlying prices, and thus allow an investor to offset the risks of a given portfolio arising from those features. The flexibility of targeting a single key feature makes such financial instruments quite unique, even when compared with other financial instruments that attempt to perform the same task, as for example the contracts known as variance swaps. The difference to these is that financial instruments according to claim 1 are sensitive to the distribution of future underlying prices for a given single future date, whereas variance swaps are sensitive to the distribution of future underlying prices observed over a period of time, rather than at a single point of time. Another example of effectiveness is the ability of directly trading the skewness of the distribution of future underlying prices. This can be performed by employing dynamic trading strategies on combinations of financial instruments according to claim 1 together with financial futures on a given underlying asset or index. A final example of the flexibility that these financial instruments offer can be seen in the effectiveness in hedging vanilla option payoffs, which can be seen in Figures 3 to 6 below.

In fact, the effectiveness in hedging vanilla options provides yet another benefit. For assets with liquid options markets, the financial or power become the reference that drives the prices of all options, since small sets of power instruments like $S_1(T_1)^2$, $S_1(T_1)^3$, $S_1(T_1)^4$ may be used to hedge any of these options, with each option requiring its specific quantities. The hedging effectiveness can generate arbitrage opportunities between the power instruments and the options, which, once exploited, reinforce the price relations between options prices, their bid/ask spreads, and even liquidity. The hedging effectiveness can also be used to reduce the level of risks run in current trading and hedging of options activities, freeing risk taking capacity that could then be used for the trading of contracts with longer maturities than before. For the other assets, where there is not enough liquidity to support an options market, the power instruments enable the trading of the distribution of the asset price, or its returns, that otherwise would not be possible. This trading, in turn, enables customized and accurate risk management to a longer term, enabling and fostering investment, which in turn is the basis for growth and wealth creation as well as for a global financial market stabilization.

A preferred embodiment of the invention is discussed in connection to a drawing, wherein

FIG. 1      displays preferred embodiments of a trading system, a hedging system and a market system, respectively,

FIG. 2      display a method for building a power instrument in a preferred embodiment,

FIG. 3      shows a graph with two curves that respectively represent the value of a portfolio as a function of the underlying price on the current date, wherein one of the two portfolios is hedged using delta hedging and the other portfolio is hedged using power instruments built with powers of the price of the underlying,

FIG. 4      shows a graph similarly to FIG. 3 but with a power instruments built with powers of the natural logarithm of the price of the underlying,

FIG. 5      shows a graph with two curves that respectively represent the payoff of a call option and the payoff of a replicating portfolio built with power instruments, the symmetric of which can be used for hedging,

FIG. 6      shows a graph similarly to FIG. 3 and 4, the curves represent the value of two portfolios one hedged using delta hedging and the other using the static hedge as shown in FIG. 5.

Same parts are labeled with identical reference numerals.

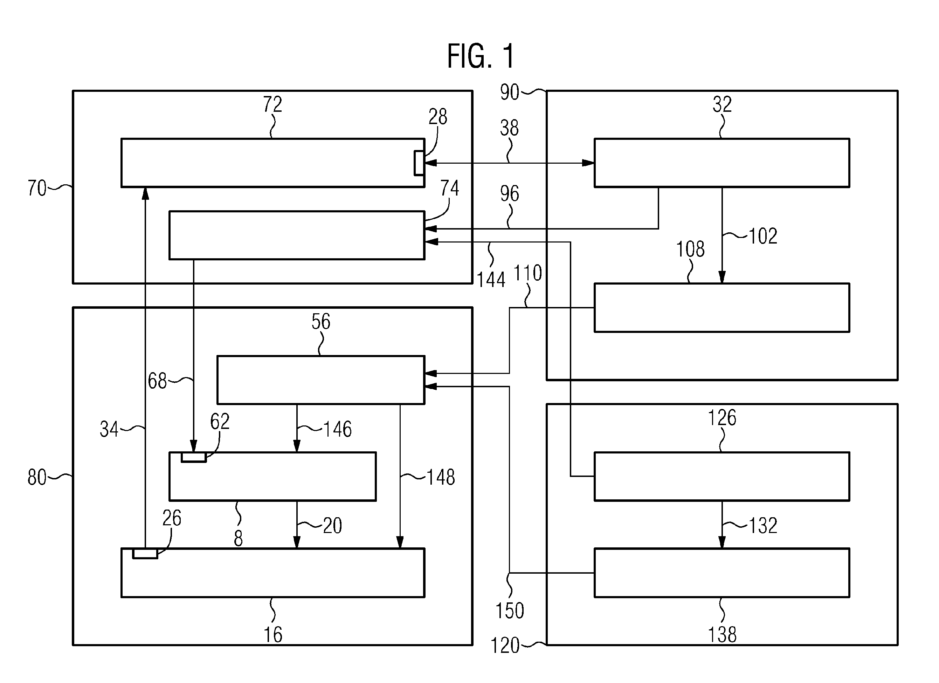

In FIG. 1, a set up with a hedging system 80, a trading system 70, and a market system 90 is displayed.

The hedging system 80 comprises a power instruments calculator 16, a portfolio manager module 8, and a market data server 56, which are implemented with software modules on common server hardware. The portfolio manager module 8 comprises a data base which contains positions on underlyings, on power instruments, and possibly other financial products such as derivatives that build up the portfolio. Via a data link 20, the portfolio manager module 8 transmits hedging criteria, especially a risk profile, to the power instruments calculator 16. Depending on the hedging criteria that have been received from the portfolio manager module 8, suitable combinations and versions of power instruments are selected by the power instruments calculator 16 that comprises an interface 26 to an order management system 72 being part of the trading system 70, by which through a data link 34 the power instruments selection and respective quantities are passed to the order management system 72.

Through a data link 146, the market data server 56 transmits the current market state to the portfolio manager module 8, and through a data link 148, it transmits the current market state to the power instruments calculator 16.

The order management system 72 comprises an interface 28 to an order book server 32 of the market system 90, by which through a data link 38 orders can be sent and managed on the order book server 32. The portfolio manager module 8 further comprises an interface 62 for receiving input, especially regarding new trades, through a data link 68 from a trade capture server 74 which is part of the trading system 70.

The market participant has several interactions with components that are part of the financial market. Part of the overall market is a market system 90 for power instruments, which comprises the above mentioned order book server 32 from which power instruments can be traded by the order management system 72. The order book server 32 further - through a data link 96 - communicates with the trade capture server 74 passing on information on orders executions. Via a data link 102, the order book server 32 communicates trade/order activity to a trading information server 108. The trading information server 108 communicates market state and trade executions with the market data server through a data link 110.

Besides the power contracts market 90, there are - as part of the overall market - other markets and information sources with components that are displayed within box 120. As in the case with the power contracts market 90, an order book server 126 communicates through a data link 132 a corresponding trade/order activity to a trade information server 138. The order book server 126 communicates with the trade capture server 74 through a data link 144 passing on information on orders executions. Through a data link 150, the trade information server 138 communicates market state and trade executions with the market data server 56.

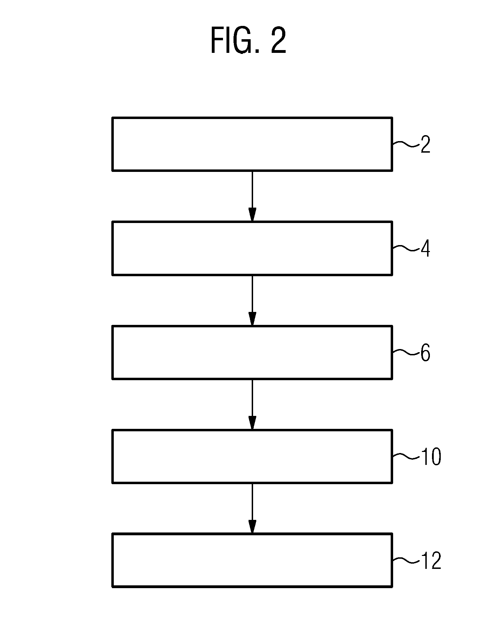

With respect to FIG. 2, a method for building a power instrument is shown. In box 2, at least one underlying is selected, the least one underlying as an example may be an asset or index. In box 4, a moment in time is chosen or selected. In box 6, a choice is made whether or not to apply the logarithm function to the price of each underlying that has been selected in box 2. For each selected underlying, the function can be chosen differently. In box 10, for each selected underlying, powers are built of the value of the function applied to the price of this underlying observed at the selected moment in time in box 4. In box 12, the powers that have been built in box 10 are multiplied, yielding a product of these powers. The result of these operations represents the payoff

$$\Phi = \prod_{i=1}^{n} f_i\big(S_i(T_i)\big)^{\alpha_i},$$

of a financial instrument according to the present invention with $S_i(T_i)$ being the price of an underlying $i$, especially an asset or index, observed at the maturity date $T_i$, $\sigma_i$ being a real number, positive or negative, and $n$ being a positive integer, and $f_i$ representing either the identity function, $f_i(x) = x$, or the logarithm function, $f_i(x) = \log(x)$, of the underlyings prices, $\prod_{i=1}^{n}$ denoting the product with $i$ running in integers from 1 to $n$. The case $n = 1$ and $\alpha_i = 1$, i.e. a term with only one underlying and first power of its price, corresponds to the payoff of a common future contract and is excluded. The method described in connection with Fig. 2 can be implemented by a power instruments calculator 16 being part of a hedging system 80 described in connection with Fig. 1

In FIGs 3 to 6, several examples are displayed demonstrating the difference between delta-hedging a portfolio and hedging the same portfolio with power instruments. Regarding the model assumptions, the Black-Scholes model is employed with a (constant) interest rate of 5 %, a constant volatility of 30 % and an initial underlying price of 1. The example portfolio comprises a call option with a strike price of 1 and a time to maturity of 1 year. For the hedging with the power instruments, henceforth called "power hedging", contracts from power 1 up to power 4 are employed.

The graphs in FIGs 3 to 6 display on the y-axis 160 the portfolio price as a function of the underlying price on the current date, which is shown on the x-axis 166, respectively. In each of these figures, a solid curve 172 displays the value of the portfolio which is delta hedged, while a dashed curve 178 represents the value of the portfolio which is power hedged.

With respect to FIG. 3, the power instruments are designed with powers of the underlying price. The delta-hedged portfolio has one call option and several units of the underlying stock (the underlying) such that the first derivative of the portfolio value is zero for small changes of the underlying price around its assumed level of 1. In case of the power hedged portfolio, it comprises one call option and several units of the power instruments such that the first four derivatives of the portfolio value are zero for small changes of the underlying price around its assumed level of 1. In case of the power hedged portfolio represented by the dashed curve 178, the value of the portfolio is flat around the price value of 1 on a much bigger interval than the delta hedge portfolio. This greater stability around the current price allows for more stable hedging strategies that do not require as much revisions as delta hedging does. Furthermore, if one assumes a fixed discrete number of hedging portfolio revisions, power hedging will produce hedging profit/loss distributions less volatile than delta hedging.

In FIG. 4, the value of the delta-hedged portfolio represented by the solid line 172 is the same as in FIG. 3, since the delta-hedging is performed exactly as in the case discussed in connection with FIG. 3. Regarding the power hedging, however, it is built using power instruments that take the natural logarithm of the underlying price, instead of the price. Besides that, the quantities of power instruments are again chosen such that the first four derivatives of the function (the value of the portfolio) are zero. The difference of this case to the case depicted in FIG. 3 is the pattern of the risk profile. Using the natural logarithm version of power instruments, the interval of prices for which the portfolio value is close to zero extends further to the upside at the expense of greater degradation on the down side. Such a choice may be more suitable for the investors who prefer to model the random behavior of the logarithmic return of prices instead of the random behavior of the prices themselves.

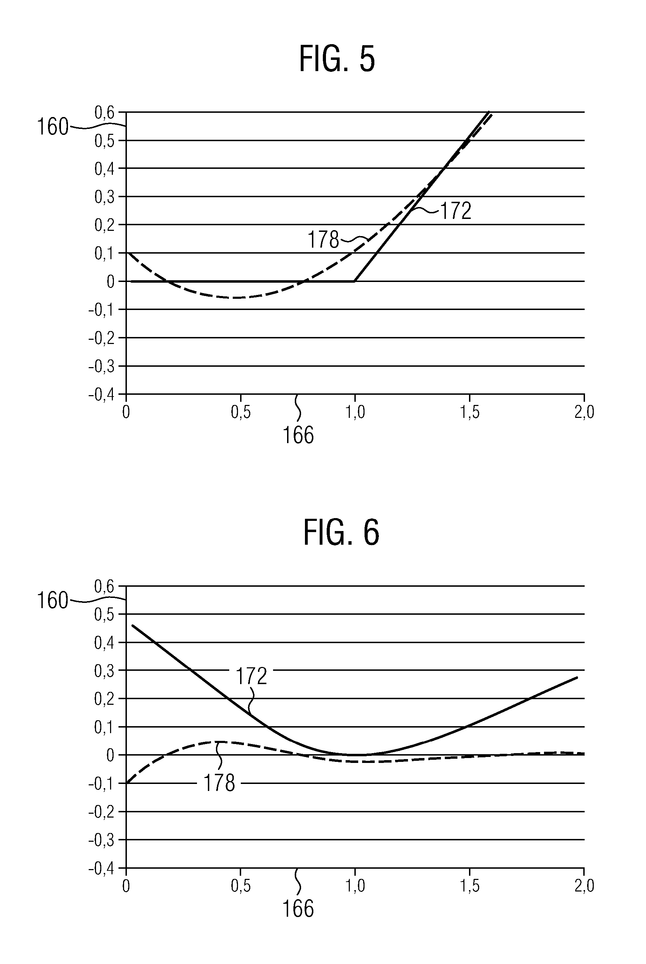

The examples shown in FIGs. 3 and 4 correspond to dynamic hedging strategies, respectively. The hedging examples shown in the following FIGs. 5 and 6 correspond to static hedging.

FIG. 5 depicts the payoff at time 1, the maturity, of the call option under consideration by curve 172, and that of replicating portfolio constructed using power instruments by curve 178. Since power instruments are smooth functions of the underlying price, and the call option is not, the replicating portfolio is chosen such that the areas where it overshoots the call payoff are compensated by areas in which it undershoots.

In FIG. 6, the current value of the delta hedged call option portfolio is shown again by curve 172, together with the value of a call option hedging portfolio using the symmetric of the replicating portfolio show in FIG. 5 by curve 178. FIG. 6 thus illustrates yet another hedging alternative made available by the existence of power instruments. In this case, though the hedging errors around the current price are bigger than on FIG. 3 and FIG. 4, this hedging portfolio requires no further revisions until maturity and still succeeds in bounding the profits and losses from the hedging strategy.

A preferred embodiment of the present invention is its use in the context of standardized contracts of a derivatives exchange. The financial instruments can be applied to indexes or financial assets of any asset class, e.g. interest rate indexes such as the EURIBOR or LIBOR rates, equity indexes and equity prices, credit spreads or foreign exchange rates. One of the simplest cases is the application to an equity index. An exchange would set up a set of power instruments for each of the maturities of the existing futures contracts and options linked to the equity index. For example, the exchange could provide $S_{index}(T_i)^2$, $S_{index}(T_i)^3$, $S_{index}(T_i)^4$, with $T_i$ denoting the futures or options maturity date. These power instruments would be traded as futures, with initial collateral enough to cover a movement of 15 % of the underlying index, and cash settlement at maturity. The daily gains and losses should be due only at maturity date to avoid having the interest rate impact the trading strategies gains (or losses). The same could be applied to a foreign exchange rate, an equity price, a forward interest rate, and many more.

Another example is a power instrument that has as its payoff the product of two swap rates of the most liquid maturities of a given currency. Thus, the power instrument would pay off at time $T$ the amount $S_{swap5Y}(T)S_{swap10Y}(T)$, with $swap5Y$ and $swap10Y$ being the 5-years swap rate and the 10-years swap rate, respectively. In a similar fashion, a similar power instrument could be devised using credit default swaps spreads for the mainly traded maturities.

**List of reference numerals**

| | |
|---|---|
| 2 | box |
| 4 | box |
| 6 | box |
| 10 | box |
| 12 | box |
| 8 | portfolio manager module |
| 14 | hedging system |
| 16 | power instruments calculator |
| 20 | data link |
| 26 | interface |
| 28 | interface |
| 32 | order book server |
| 34 | data link |
| 38 | data link |
| 44 | interface |
| 50 | data link |
| 56 | market data server |

| 62 | interface |
| --- | --- |
| 68 | data link |
| 70 | trading system |
| 72 | order management system |
| 74 | trade capture server |
| 80 | hedging system |
| 90 | market system |
| 96 | data link |
| 102 | data link |
| 108 | trading information server |
| 110 | data link |
| 120 | box |
| 126 | order book server |
| 132 | data link |
| 138 | trade information server |
| 144 | data link |
| 146 | data link |
| 148 | data link |
| 150 | data link |
| 160 | y-axis |
| 166 | x-axis |
| 172 | solid curve |
| 178 | dashed curve |

**Claims**

1. Financial instrument, especially financial contract, for an underlying, especially an asset or index, whereby its final payoff is a product of powers of one or several prices or values of underlyings or logarithms thereof taken at one or several moments in time, excluding the case of one single underlying to the power of one.

2. A method for building a financial instrument, especially a financial contract, based on a number of underlyings, especially assets or indexes, with corresponding prices, comprising the steps

   • Selecting at least one underlying;
   • Selecting at least one moment in time;

- Choosing whether or not to apply the logarithm function to the price of each underlying;
- Building powers of the said price or logarithm of price of each selected underlying observed at the selected moment in time;
- Multiplying said powers, excluding the case of one single underlying, observed at one single moment in time, to the power of one.

3. Method for hedging a portfolio comprising the risk of changing prices of a number of underlyings, especially assets or indexes, adding a number of financial instruments according to claim 1, whereby the risk of changing prices of each of the underlyings of the said financial instruments is present in the portfolio and offset by said instruments.

4. Method according to claim 3, wherein a number of financial instruments according to claim 1 is added to the portfolio such that the potential gains and losses profile is changed to best match the risk preferences of the owner of the portfolio.

5. Method for broadcasting or making public current or past prices of at least one financial instrument according to claim 1 or any other value derived from them, wherein these prices are transmitted to data systems that allow public access, in particular systems that stream price data live and/or warehouse such data and make it available at a deferred time, either free of charge or at a cost.

6. Method for calculating the reference value for financial instruments, whereby the price of at least one financial instrument according to claim 1 or any other value derived from it is used for its calculation.

7. Server-based market system to create an execution environment for orders of at least one financial instrument according to claim 1, comprising an updatable data base containing orders and transactions of said instruments, and providing output data of orders and transactions relating to at least one financial instrument according to claim 1.

8. Server-based hedging system for hedging a portfolio, comprising an instruments calculator, which according to given hedging criteria, especially a risk profile, calculates quantities or other values relating to at least one financial instrument according to claim 1, which may also depend on input received from a market system according to claim 7, especially regarding the current market state.

9. Server-based trading system that submits orders for transactions and captures order executions of at least one financial instrument according to claim 1, which communicates with a hedging system according to claim 8, and a market system according to claim 7.

FIG. 1

# FIG. 2

## FIG. 3

## FIG. 4

# FIG. 5

# FIG. 6

# EP 2 767 949 A1

Europäisches
Patentamt

European
Patent Office

Office européen
des brevets

## EUROPEAN SEARCH REPORT

**Application Number**

EP 13 15 5322

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | | INV. G06Q40/06 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 4 June 2013 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 15 5322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br><br>----- | | |
| | | | **TECHNICAL FIELDS SEARCHED (IPC)** |

The present search report has been drawn up for all claims

| Place of search | Date of completion of the search | Examiner |
|---|---|---|
| The Hague | 4 June 2013 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)